# EUROPEAN PATENT APPLICATION

(11) **EP 4 236 231 A1**
(43) Date of publication of application: **30.08.2023**
(21) Application number: 20935360.6
(22) Date of filing: 08.12.2020
(51) Int. Cl.: H04L 29/06

(54) **SECURITY DEFENSE METHOD AND SYSTEM FOR INDUSTRIAL CONTROL SYSTEM NETWORK**

(30) Priority: 24.09.2020 CN 202011016761
(71) Applicant: China Nuclear Power Engineering Co., Ltd., Shenzhen, Guangdong 518124 (CN); Peking University Shenzhen Graduate School, Shenzhen, Guangdong 518055 (CN)
(72) Inventor: CUI, Gang, Shenzhen, Guangdong 518124 (CN); WANG, Yun min, Shenzhen, Guangdong 518124 (CN); SUN, Hui, Shenzhen, Guangdong 518124 (CN); LI, Hui, Shenzhen, Guangdong 518124 (CN); ZHAI, Chang Chun, Shenzhen, Guangdong 518124 (CN); XIONG, Jin Chuan, Shenzhen, Guangdong 518124 (CN); ZHANG, Lin, Shenzhen, Guangdong 518124 (CN); ZHANG, Jin Hua, Shenzhen, Guangdong 518124 (CN); YE, Yu Lin, Shenzhen, Guangdong 518124 (CN); KANG, Li Fu, Shenzhen, Guangdong 518124 (CN); MA, Hua Jun, Shenzhen, Guangdong 518124 (CN)
(74) Representative: Greaves Brewster LLP
(86) International application number: PCT/CN2020/134592
(87) International publication number: WO 2021/227465

(57) **Abstract**

The present invention provides a security defense method for an industrial control system network. The industrial control system network includes a shared network module (10) and an industrial control network module (20). The security defense method includes the steps of: establishing a management center module (11) in the shared network module (10); the management center module (11) performing security management on a number of grading systems in the shared network module (10); establishing, in the industrial control network module (20), a trusted security module (21) in communication with the management center module (11); and the trusted security module (21) performing trusted defense on the industrial control network module (20). The present invention also provides a security defense system for an industrial control system network. By means of the security defense method and system for an industrial control system network of the present invention, the defense method is transformed from passive "blocking, searching and killing" to active immunization, and organized attacks with clear targets can be defended against effectively, given that the requirements of a high real-time performance and high reliability are met.

## Description

### FIELD OF THE INVENTION

The present invention generally relates to the technical field of an industrial control system and, more particularly, relates to a security defense system and method for an industrial control system network.

### BACKGROUND OF THE INVENTION

With the rapid development of internet technology and internet of things technology, the convergence of OT (operational technology), IT (information technology) and CT (communication technology) is getting faster and faster, and the age of the industrial internet has arrived. More and more of the "island" industrial control systems (ICS) used in nuclear power plants are connected to internal corporate networks or the internet, the safety risk of ICS becomes more and more popular, and the mystery veil of internal communication protocols, operating systems, application software, security management policies and management processes are gradually unveiled. It is easy for the attackers to attack an industrial control system, and the safety of industrial control system is related to the safety, reliability, efficiency and economic operation of nuclear power plant.

The threats of industrial control system in nuclear power plant mainly come from vulnerability attack, data manipulation, virus, worm and Trojan horse. Conventional defense technology mainly adopts "blocking, searching and killing" method, such as firewall, authentication technology, access control, vulnerability scanning and disaster recovery. However, the defense capability of conventional defense method is passive and static, depends on the system configuration before accessing the system, and can only detect and defend the network security attacks. But the network security protection of nuclear power plant industrial control system is a dynamic process, new security vulnerabilities emerge constantly, and the hacker's attack methods are constantly updated. In addition, conventional defense technology can only passively receive every intrusion attack from the network, it is difficult to detect, identify and deal with the new means of network attack at the same time. The passive defense method is difficult to fundamentally solve the network security problem.

AI Dynamic Defense (ADD) is a dynamic defense system proposed by Beijing Veda Information Technology Co., Ltd. The AI dynamic defense system constructs an "attack chain" model by collecting the system data and using the artificial intelligence technology to study the large-scale data deeply. Based on the "state perception" of the current network, the system makes the most suitable choice of defense tactics at the right time, destroys the implementation conditions of network attacks, and can dynamically switch to the "defense matrix" of the system, to improve the difficulty of the network attack from the attackers.

There are also some problems in the existing intelligent dynamic defense: firstly, the protective effect of the intelligent dynamic defense is uncertain; secondly, the intelligent dynamic defense needs to collect large-scale data for the design of the deep learning model, which may lead to the increase of design, volume, cost, power consumption and complexity of maintenance; finally, the realization of intelligent dynamic defense depends on the diversity of hardware and software components and the supply level of diversity.

In view of the foregoing, what is needed, therefore, is to provide a new security defense method and system for industrial control system network, to overcome the above disadvantages.

### SUMMARY OF THE INVENTION

One object of the invention is to provide a security defense method and system for an industrial control system network, to realize the transformation of the defense method from passive "blocking, searching and killing" to active immunization, and organized attacks with clear targets can be defended against effectively, given that the requirements of a high real-time performance and high reliability are met.

According to one embodiment of the present invention, a security defense method for industrial control system network is provided, the industrial control system network includes a shared network module and an industrial control network module, the security defense method includes the steps of:
establishing a management center module in the shared network module;
the management center module performing security management on a number of grading systems in the shared network module;
establishing, in the industrial control network module, a trusted security module in communication with the management center module;
the trusted security module performing trusted defense on the industrial control network module.

According to a preferred embodiment of the present invention, the industrial control network module includes a production control zone and a management information zone, the step of establishing, in the industrial control network module, a trusted security module in communication with the management center module includes the steps of:
constructing a trusted computing environment module in the production control zone and the management information zone;
checking reliability and safety of information flow entering and leaving the trusted computing environment to form a trusted zone boundary module;
verifying entity objects participating in communication in the trusted computing environment module, to form a trusted communication network module.

According to a preferred embodiment of the present invention, the step of constructing a trusted computing environment module in the production control zone and the management information zone includes the steps of:
carrying out credible transformation on the computing nodes in the production control zone and the management information zone, to form a trusted computing node module;
constructing a trusted architecture module in the production control zone and the management information zone;
implanting the trusted computing node module into the trusted architecture module, to form the trusted computing environment module.

According to a preferred embodiment of the present invention, the step of constructing a trusted architecture module in the production control zone and the management information zone includes the steps of:
constructing a trusted platform control module in the production control zone and the management information zone;
arranging a trusted software base module in the trusted platform control module, to form the trusted architecture module.

According to another embodiment of the present invention, a security defense system for industrial control system network is provided, wherein the industrial control system network includes a shared network module and an industrial control network module, the security defense system includes a management center module and a trusted security module in communication with the management center module, the management center module is used for carrying out security management on a number of grading systems in the shared network module, the trusted security module is used for carrying out trusted defense on the industrial control network module.

According to a preferred embodiment of the present invention, the industrial control network module includes a production control zone and a management information zone, the trusted security module includes a trusted computing environment module, a trusted zone boundary module and a trusted communication network module, the trusted zone boundary module is used for checking reliability and safety of information flow entering and leaving the trusted computing environment module, the trusted communication network module is used verifying entity objects participating in communication in the trusted computing environment module.

According to a preferred embodiment of the present invention, the trusted computing environment module includes a trusted computing node module equipped with a trusted chip.

According to a preferred embodiment of the present invention, the trusted computing environment module includes a trusted architecture module, and the trusted architecture module includes a trusted platform control module and a trusted software base module.

According to a preferred embodiment of the present invention, the trusted security module includes a trusted management center module, and the trusted management center module is used for storing a server of the trusted security module.

According to a preferred embodiment of the present invention, the production control zone includes a control zone and a non-control zone in communication with each other.

Compared with the prior art, the security defense method and system for industrial control system network of the present invention deploys a management center module in the group headquarter, responsible for security management of shared systems within the shared network module and grading system in the demilitarized zone. Each nuclear plant establishes a trusted security module, or secondary management centre. The trusted security module is a two-level cross-regional trusted security management center, which is responsible for the trusted security management of each area within the industrial control network module, and divides the industrial control system network into sub-areas and grades, to achieve the transformation of the defense method from the passive "blocking, searching and killing" to active immunity. In addition, the application of trusted computing technology in industrial control system network of nuclear power plant is realized. The active defense of trusted computing technology can timely discover the network attack in progress, predict and identify the potential attack, and take corresponding measures to make the attacker cannot achieve its goal. Given that the requirements of a high real-time performance and high reliability are met, organized attacks with clear targets can be defended against effectively, thereby solving a series of security problems existing in the grading system of industrial control system network 101 to meet the requirements of the relevant standards of state grade protection.

To make the above objects, features and advantages of the present invention more obvious and understandable, the embodiments of the present invention will be described in detail as following in view of the attached drawings.

### BRIEF DESCRIPTION OF THE DRAWINGS

The technical solution of the present invention will now be described more clearly in view of the drawings. The drawings described below only show some embodiments of the present invention. Obviously, based on the provided drawings, one ordinary skilled in the art can obtain other drawings without creative work.
Fig. 1 is a flow chart of a security defense method for industrial control system network according to one embodiment of the present invention;
Fig. 2 is a principle block diagram of a security defense system for industrial control system network applied to an industrial control system network according to another embodiment of the present invention;
Fig. 3 is a sub-step flow chart of step S3 of a security defense method for industrial control system network according to one embodiment of the present invention;
Fig. 4 is a principle block diagram of a security defense system for industrial control system network according to one embodiment of the present invention;
Fig. 5 is a sub-step flow chart of step S31 of a security defense method for industrial control system network according to one embodiment of the present invention; and
Fig. 6 is the principle block diagram of a trusted security module of a security defense system for industrial control system network according to one embodiment of the present invention.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

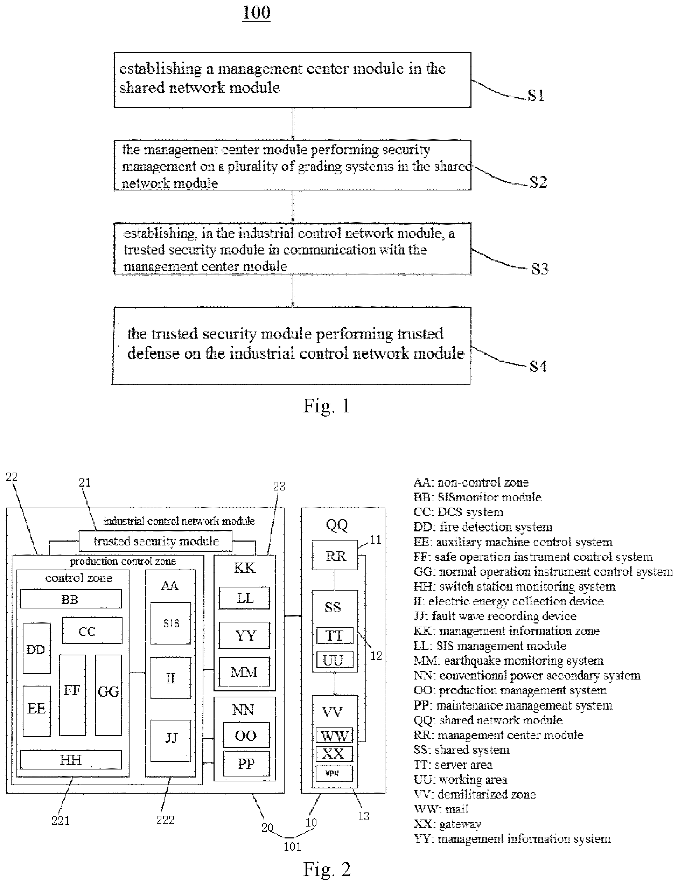

Referring to Figs. 1 and 2, one embodiment of the present invention provides a security defense method for industrial control system network 100, the industrial control system network 101 includes a shared network module 10 and an industrial control network module 20, and the security defense method 100 includes the steps of:
Step S1: establishing a management center module 11 in the shared network module 10. Specifically, a management center module 11, a level 1 management center, is arranged at group headquarter to manage the security management of the grading system within the shared network module 10, responsible for system management, security control and audit tracking.
Step S2: the management center module 11 performing security management on a number of grading systems in the shared network module 10. Specifically, the shared network module 10 includes a shared system 12 and a demilitarized zone 13 (DMZ). The management center module 11 is responsible for the security management of the grading system of the shared system 12 and the demilitarized zone 13 within the shared network module 10.
Step S3: establishing, in the industrial control network module 20, a trusted security module 21 in communication with the management center module 11. Specifically, in each nuclear power plant, a trusted security module 21, which is a secondary management center, is established. The trusted security module 21 is a secondary cross-regional trusted safety management center, responsible for the trusted security management of each area in the industrial control network module 20. The trusted security module 21 is also responsible for the system access policy of between the areas, making the security rules of the area boundary.
Step S 4: the trusted security module 21 performing trusted defense on the industrial control network module 20. Understandably, trustworthiness means that an entity always behaves as expected when it achieves a given goal, emphasizing the predictability and controllability of the outcome of the action. Trusted computing uses trusted components to make the behavior predictable under any conditions, and can resist the damage caused by bad code and some physical interference. Trusted defense is a defense method based on trusted computing technology, which is based on trusted computing version 3.0 adopting active defense technologies and uses self-designed encryption algorithm. The structure of trusted computing cipher module and two-layer authentication certificate are defined, to simplify the management of certificates, and can make situation awareness according to the historical behavior records and current behavior characteristics of the participants, to judge whether the current subject's behavior is illegal, ultra vires or beyond the scope. Furthermore, the trusted architecture of trusted computing version 3.0 requires only chips and software to achieve active immunity, thereby greatly reducing the impact on existing hardware and software architectures.

The security defense method for industrial control system network 100 of the present invention deploys a management center module 11, responsible for security management of shared systems 12 within the shared network module 10 and grading system in the demilitarized zone 13. Each nuclear plant establishes a trusted security module 21, or secondary management centre. The trusted security module 21 is a two-level cross-regional trusted security management center, which is responsible for the trusted security management of each area within the industrial control network module 20, and divides the industrial control system network 101 into sub-areas and grades, to achieve the transformation of the defense method from the passive "blocking, searching and killing" to active immunity. In addition, the application of trusted computing technology in industrial control system network 101 of nuclear power plant is realized. The active defense of trusted computing technology can timely discover the network attack in progress, predict and identify the potential attack, and take corresponding measures to make the attacker cannot achieve its goal. Given that the requirements of a high real-time performance and high reliability are met, organized attacks with clear targets can be defended against effectively, thereby solving a series of security problems existing in the grading system of industrial control system network 101 to meet the requirements of the relevant standards of state grade protection.

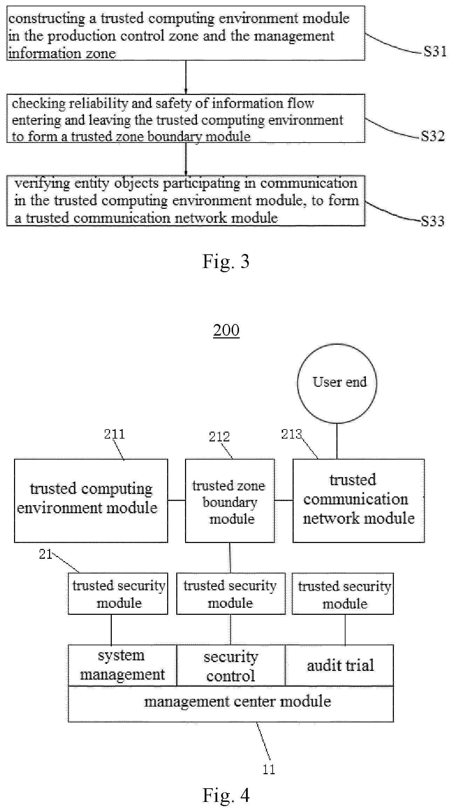

Further referring to Figs. 3 and 4, the industrial control network module 20 includes a production control area 22 and a management information area 23. Step S3 also includes the steps of:
Step S31: constructing a trusted computing environment module 211 in the production control zone 22 and the management information zone 23. Specifically, the trusted computing environment module 211 is composed of trusted computing nodes equipped with trusted chips, and the application system can run safely with the support of trusted computing technology, to ensure the safety and credibility of the on-site control, production monitoring and scheduling in the production control zone 22 and the enterprise management process in the management information zone 23.
Step S32: checking reliability and safety of information flow entering and leaving the trusted computing environment to form a trusted zone boundary module 212. In particular, the security rules for the regional boundaries of the production control zone 22 and the management information zone 23 is established, and the reliability and safety of information flow entering and leaving the trusted computing environment 211 are checked, to ensure that no information violating ICS system security rules flows across the boundary.
Step S33: verifying entity objects participating in communication in the trusted computing environment module 211, to form a trusted communication network module 213. Specifically, the trusted communication network module 213 can protect the confidentiality and integrity of the communication packets so that they cannot be eavesdropped and tampered by unauthorized attackers during the transmission process, thereby ensuring the accuracy and trustworthiness of the communication. Furthermore, by combining the trusted communication network module 213 with the trusted zone boundary module 212, the trusted access to the network can be realized.

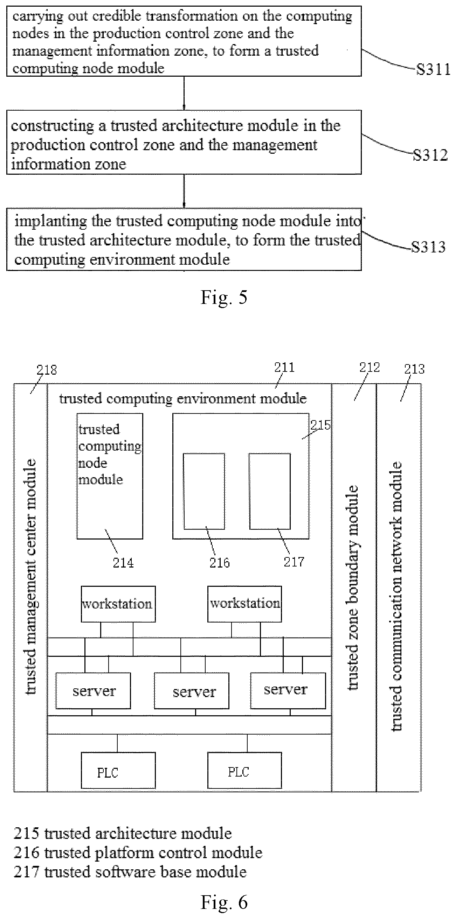

Further, referring to Figs. 5 and 6, Step S31 also includes the steps of:
Step S311: carrying out credible transformation on the computing nodes in the production control zone 22 and the management information zone 23, to form a trusted computing node module 214. Specifically, the trusted computing environment module 211 is mainly composed of the trusted computing node module 214. The trusted transformation of computing nodes in the production control zone 22 and the management information zone 23 is the key to constitute the trusted computing environment module 211. Specifically, distributed control system (DCS) is mainly composed of two kinds of nodes, one is special purpose computing node of process control system (PLC), and the other is general computing node, such as servers and workstations.
Step S312: constructing a trusted architecture module 215 in the production control zone 22 and the management information zone 23. Specifically, the trusted architecture module 215 is the infrastructure of trusted computing node module 214, where the trusted chain is a platform based on physical trusted roots and cryptographic firmware, and the process of credible control, measurement and judgment based on trusted basic software is carried out.
Step S313: implanting the trusted computing node module 214 into the trusted architecture module 215, to form the trusted computing environment module 211. Specifically, by modifying the two types of computing nodes in step S311 and embedding the modified computing nodes into the trusted architecture module 215, trusted architecture module 215 can provide strong trusted support for the supervision and control of the reformed trusted computing node module 214, so that computing resources will not be disturbed and destroyed, thereby improving the self-immunity of the trusted computing node module 214. It can be understood that the security protection system is formed by the trusted architecture module 215, and every security function on the trusted computing node module 214 is supported by the trusted architecture module 215, thereby achieving a better safety effect.

Further, step S312 includes the sub-steps of:
constructing a trusted platform control module 216 in the production control zone 22 and the management information zone 23.
arranging a trusted software base module 217 in the trusted platform control module 216, to form the trusted architecture module 215.

Understandably, the trusted architecture module 215 is designed and constructed primarily through the trusted platform control module 216 (TPCM) and the trusted software base module 217(TSB).

Specifically, for the construction of TPCM, if the construction of independent trusted computing platform products, different approaches can be taken for different types of devices: for new types of devices, a trusted machine can be constructed by embedding a trusted chip directly into the motherboard of the machine. For stock-type devices, the active immune system can be implemented by inserting a trusted control card into a peripheral component interconnect (PCI-E) card slot on the motherboard. In addition, to realize the trusted computing enhancement that is not easily accessible to card-insertion devices, a trusted platform control module 216 can couple with a universal serial bus (USB). The above three methods can conveniently upgrade the existing equipment to the trusted computing system, and then construct the trusted platform control module 216, without making too many changes to the existing ICS system, and make the new and old equipment merge into one and obtain the security trustworthiness of the ICS system at the same time.

Therefore, in the nuclear power ICS system, TPCM can be constructed by using mature trusted computing technology through card insertion, on board and in central processing unit (CPU). Specifically, the PCI-E-based TPCM card can be used in the ICS system for trusted transformation of all kinds of existing servers, workstations, front-end computer. The industrial control system can also be constructed by using the server and workstation with trusted TPCM function on the motherboard, or domestic CPU with TPCM function of the whole machine platform can be purchased to construct industrial control and information management system. TPCM chip can be constructed on special purpose industrial control equipment, and the CPU with TPCM function can be used to construct the industrial control system and equipment, when domestic PLC and other equipments are mature.

For the construction of TSB, TSB and TPCM constitute the trusted architecture module 215 in the nuclear power ICS system, which plays the role of trusted security support. For conditional trusted computing node module 214, TSB can be arranged in the hardware resources provided by TPCM or in the operating system of an existing host. For the trusted computing node module 214, which is inconvenient to arrange TPCM hardware, TSB software can be arranged to enhance the node's credibility and security. For the mature domestic industrial control system, it is necessary to consider the arrangement of trusted software base module 217 in embedded equipment such as PLC.

The present invention also provides a security defense system for industrial control system network 200. The industrial control system network 101 includes a shared network module 10 and an industrial control network module 20. The security defense system 200 includes a management center module 11 and a trusted security module 21 in communication with the management center module 11, the management center module 11 is used for the security management of a number of grading systems in the shared network module 10, and the trusted security module 21 is used for performing trusted defense on the industrial control network module 20.

Specifically, a management center module 11, a level 1 management center, is arranged at group headquarter to manage the security management of the grading system within the shared network module 10. The shared network module 10 includes a shared system 12 and a demilitarized zone 13 (DMZ). The management center module 11 is responsible for the security management of the grading system of the shared system 12 and the demilitarized zone 13 within the shared network module 10. In each nuclear power plant, a trusted security module 21, which is a secondary management center, is established. The trusted security module 21 is a secondary cross-regional trusted safety management center, responsible for the trusted security management of each area in the industrial control network module 20. The trusted security module 21 is also responsible for the system access policy of between the areas, making the security rules of the area boundary.

Understandably, trustworthiness means that an entity always behaves as expected when it achieves a given goal, emphasizing the predictability and controllability of the outcome of the action. Trusted computing uses trusted components to make the behavior predictable under any conditions, and can resist the damage caused by bad code and some physical interference. Trusted defense is a defense method based on trusted computing technology, which is based on trusted computing version 3.0 adopting active defense technologies and uses self-designed encryption algorithm. The structure of trusted computing cipher module and two-layer authentication certificate are defined, to simplify the management of certificates, and can make situation awareness according to the historical behavior records and current behavior characteristics of the participants, to judge whether the current subject's behavior is illegal, ultra vires or beyond the scope. Furthermore, the trusted architecture of trusted computing version 3.0 requires only chips and software to achieve active immunity, thereby greatly reducing the impact on existing hardware and software architectures.

Further, the industrial control network module 20 includes a production control zone 22 and a management information zone 23. The trusted security module 21 includes a trusted computing environment module 211, a trusted zone boundary module 212 and a trusted communication network module 213, the trusted zone boundary module 212 is used for checking reliability and safety of information flow entering and leaving the trusted computing environment to form a trusted zone boundary module 212, the trusted communication network module 213 is used for verifying entity objects participating in communication in the trusted computing environment module 211.

In particular, the trusted computing environment module 211 includes a trusted computing node module 214 equipped with a trusted chip to realize credible transformation of the computing nodes in the production control zone 22 and the management information zone 23, to form a trusted computing node module 214. The trusted computing environment module 211 also includes a trusted architecture module 215, which is the infrastructure of the trusted computing node module 214. The trusted chain in the trusted architecture module 215 is based on the platform of the physical trusted root and the cryptographic firmware, to carry out trusted control, measurement and decision process based on the trusted fundamental software. The trusted architecture module 215 includes a trusted platform control module 216 and a trusted software base module 217. The trusted architecture module 215 is designed and constructed mainly through the trusted platform control module 216 and the trusted software base module 217.

Further, the trusted security module 21 also includes a trusted management center module 218 for storing a server of the trusted security module 21. Specifically, the trusted computing environment module 211 consists of multiple workstations, multiple servers and industrial control PLCs. The server can be SU server, PU Server, XU Server, etc. The workstations can be operator workstations, engineer workstations, TXS engineer workstations, DS workstations. These servers and devices in trusted computing environment module 211 form a platform supported by trusted computing technology by adding TPCM or TSB modules. The trusted zone boundary module 212 is a position where the DCS system can interact with other systems, such as the XU communication server. The trusted communication network module 213 is a network to realize data interaction with other systems and includes switches, routers and other devices. Therefore, the communication network devices implemented by computer software and hardware must be trusted, and trusted roots, trusted software bases as well as trusted oversight are indispensable. The trusted management center module 218 is the centralized area of the security product management server, which mainly stores the server of the trusted security module 21.

In the present embodiment, the production control zone 22 includes a control zone 221 and a non-control zone 222 in communication with each other. It is understandable that the industrial control network module 20 of a nuclear power plant is generally divided into a production control zone 22 and a management information zone 23, with a production control zone 22 as the network control system for each nuclear power plant. The production control zone 22 is divided into a control zone 221 and a non-control zone 222 according to the business importance and the degree of influence on the primary system. The management information zone 23 communicates with the shared network module 10.

It is understandable that a connection between the production control zone 22 and the management information zone 23 is realized via an internal network, which is a power special purpose horizontal one-way isolation close to a physical isolation. A secure and reliable hardware firewall or a device with access control function is used between the control zone 221 and the non-control zone 222, to achieve the logical isolation function therebetween. Plant-level distributed control systems (DCS) for nuclear power plants are arranged in control zone 221, the exchange of information with the plant-level information monitoring and control system (SIS) optimization functions operating in the non-control zone 222 shall be carried out using logic-isolated safety precautions. At the same time, the monitoring function module of SIS system is located in control zone 221, and its management function module is located in the management information zone 23.

In the present embodiment, fire detection system, auxiliary machine control system, safe operation instrument control system, normal operation instrument control system, switch station monitoring system are also arranged in the control zone 221. The non-control zone 222 also includes the electric energy collection device and the fault wave recording device. The management information zone 23 also includes management information systems, earthquake monitoring systems. The management information zone 23 is logically isolated from conventional power secondary systems, conventional power secondary system includes production management system and maintenance management system, conventional power secondary system is in communication with the non-control zone 222.

It should be noted that, all embodiments of the safety defense method 100 for industrial control system network of the present invention are applicable to the security defense system 200 for industrial control system network of the present invention, and can achieve the same or similar technical effect.

In view of the foregoing, the security defense method 100 and the security defense system 200 for industrial control system network provided by the present invention includes a management center module 11 in the group headquarter, responsible for the security management of shared system 12 within the shared network module 10 and grading systems within the demilitarized zone 13. Each nuclear power plant establishes a trusted security module 21 or secondary management center. The trusted security module 21 is a two-level cross-regional trusted security management center, which is responsible for the security and trusted management of each area in the industrial control network module 20, and divides the industrial control system network 101 into sub-areas, to achieve the transformation of the defense method from passive "blocking, searching and kill" to active immunity. In addition, the application of trusted computing technology in industrial control system network 101 of nuclear power plant is realized. The active defense of the trusted computing technology can timely discover the network attack in progress, predict and identify the potential attack, and take corresponding measures to make the attacker cannot achieve its goal. Given that the requirements of a high real-time performance and high reliability are met, organized attacks with clear targets can be defended against effectively, which can solve a series of security problems existing in the grading system of industrial control system network 101, and meets the requirements of the relevant standards of state grade protection. At the same time, according to the characteristics of the sub-area of the industrial control system network 101 of the nuclear power plant, on the basis of a physical security trusted computing environment module 211, starting from the security of the trusted computing node module 214, a three dimensional protection system frame having three-level protection, which is composed of the trusted computing environment module 211, the trusted zone boundary module 212 and the trusted communication network module 213, supported by the management center module 11 is constructed. The security mechanism and strategy are constructed, to form a security defense system of the nuclear power ICS system network incorporating depth defense and active defense.

Obviously, the embodiments described above are only a part of the embodiments of the present application, not all embodiments of the present invention. The drawings only show some preferable embodiments of the present invention, but do not limit the scope of the present invention. The present invention may be implemented in many different forms and, conversely, the embodiments are provided with the aim of providing a more thorough understanding of the present invention. Although the present invention is described in detail in light of the preceding embodiments, one ordinary skilled in the art may modify the technical solutions described in the preceding specific implementation modalities, or some of the technical characteristics of the equivalent replacement. The same applies to any direct or indirect use of the equivalent structure of the specification and the attached drawings in other related technical fields.

## Claims

1. A security defense method (100) for industrial control system network (101), **characterized in that** the industrial control system network (101) comprises a shared network module (10) and an industrial control network module (20), the security defense method (100) comprises the steps of:
S 1: establishing a management center module (11) in the shared network module (10);
S2: the management center module (11) performing security management on a plurality of grading systems in the shared network module (10);
S3: establishing, in the industrial control network module (20), a trusted security module (21) in communication with the management center module (11);
S4: the trusted security module (21) performing trusted defense on the industrial control network module (20).

2. The security defense method (100) for industrial control system network (101) of claim 1, **characterized in that** the industrial control network module (20) comprises a production control zone (22) and a management information zone (23), the step of establishing, in the industrial control network module (20), a trusted security module (21) in communication with the management center module (11) comprises the steps of:
S31: constructing a trusted computing environment module (211) in the production control zone (22) and the management information zone (23);
S32: checking reliability and safety of information flow entering and leaving the trusted computing environment to form a trusted zone boundary module (212);
S33: verifying entity objects participating in communication in the trusted computing environment module (211), to form a trusted communication network module (213).

3. The security defense method (100) for industrial control system network (101) of claim 2, **characterized in that** the step of constructing a trusted computing environment module (211) in the production control zone (22) and the management information zone (23) comprises the steps of:
S311: carrying out credible transformation on the computing nodes in the production control zone (22) and the management information zone (23), to form a trusted computing node module (214);
S312: constructing a trusted architecture module (215) in the production control zone (22) and the management information zone (23);
S313: implanting the trusted computing node module (214) into the trusted architecture module (215),
to form the trusted computing environment module (211).

4. The security defense method (100) for industrial control system network (101) of claim 3, **characterized by** the step of constructing a trusted architecture module (215) in the production control zone (22) and the management information zone (23) comprises the steps of:
constructing a trusted platform control module (216) in the production control zone (22) and the management information zone (23);
arranging a trusted software base module (217) in the trusted platform control module (216), to form the trusted architecture module (215).

5. A security defense system (200) for industrial control system network (101), **characterized in that** the industrial control system network (101) comprises a shared network module (10) and an industrial control network module (20), the security defense system comprises a management center module (11) and a trusted security module (21) in communication with the management center module (11), the management center module (11) is used for carrying out security management on a plurality of grading systems in the shared network module (10), the trusted security module (21) is used for carrying out trusted defense on the industrial control network module (20).

6. The security defense system (200) for industrial control system network (101) of claim 5, **characterized in that** the industrial control network module (20) comprises a production control zone (22) and a management information zone (23), the trusted security module (21) comprises a trusted computing environment module (211), a trusted zone boundary module (212) and a trusted communication network module (213), the trusted zone boundary module (212) is used for checking reliability and safety of information flow entering and leaving the trusted computing environment module (211), the trusted communication network module (213) is used verifying entity objects participating in communication in the trusted computing environment module (211).

7. The security defense system (200) for industrial control system network (101) of claim 6, **characterized in that** the trusted computing environment module (211) comprises a trusted computing node module (214) equipped with a trusted chip.

8. The security defense system (200) for industrial control system network (101) of claim 7, **characterized in that** the trusted computing environment module (211) comprises a trusted architecture module (215), the trusted architecture module (215) comprises a trusted platform control module (216) and a trusted software base module (217).

9. The security defense system (200) for industrial control system network (101) of claim 8, **characterized in that** the trusted security module (21) comprises a trusted management center module (218), the trusted management center module (218) is used for storing a server of the trusted security module (21).

10. The security defense system (200) for industrial control system network (101) of claim 9, **characterized in that** the production control zone (22) comprises a control zone (221) and a non-control zone (222) in communication with each other.
